# EUROPEAN PATENT APPLICATION

(11) **EP 3 010 267 A1**
(43) Date of publication of application: **20.04.2016**
(21) Application number: 15155529.9
(22) Date of filing: 18.02.2015
(51) Int. Cl.: H04W 12/12, G06Q 10/08, G08B 21/24

(54) **Wireless security and/or location system with key modules for portable objects**

(30) Priority: 17.10.2014 LT 2014508
(71) Applicant: Eldes, UAB, 06313 Vilnius (LT)
(72) Inventor:
(74) Representative: Draugeliene, Virgina Adolfina

(57) **Abstract**

The invention relates to the field of security systems, namely, wireless systems intended to protect and/or to locate one or more associated portable objects using wireless key tag modules and a mobile terminal, for instance, a mobile phone. The wireless security and/or location system of portable objects with key tag modules includes a mobile terminal which supports two-way wireless communication with fixed and mobile key tag modules via the security device which is attached to the object of interest in a concealed way. Each removable part of the object of interest has a relevant fixed key tag module attached in a concealed way. The mobile key tag modules are kept with authorized users. The mobile terminal itself can be a mobile key tag module only or a mobile key tag module and a system configurator. The system configurator can activate and deactivate said key tag modules and change the system operation algorithm. The security device may be provided with a location determination equipment.

## Description

### Technical field to which invention relates

The invention relates to the field of security systems, namely, wireless systems intended to protect and/or to locate one or more associated portable objects using wireless key tag modules and a mobile terminal, for instance, a mobile phone.

### Relevant prior Art

United States patent US6297737, published on October 2, 2001 describes a locating system, which includes a wireless communication for transmission of signals to one or more of the objects in search. A locating tag is attached to each object of interest. When the tagged object is lost, the user uses a detector to find it, the detector may be a mobile phone. Using the mobile phone the user chooses the tagged object in search from a list and sends a signal-query to the locating tag of the object in search, which responds by generating a signal, which is transmitted to the user's mobile phone, according to which the user locates the object in search.

The shortcoming of this locating system is its narrow functional application because the system communicates with the locating tags in signals sent by the mobile phone over a very short distance, usually up to 30 m, and based on the incoming response signal may or may not detect the objects of interest in this environment and enable or disable any wireless tags.

United States patent application US20110159917, published on June 30, 2011 describes a system such as an audible key locator system which includes a mobile communication device having at least one sound or other signal generator that communicates with the control module, wherein the control module is configured to send a signal to the audible tone generator to emit an audible tone. The locating system may also include a locator device physically detached from the mobile communication device. The locator device may include a receiver configured to receive the audible signal from the audible tone generator and to generate a signal.

The shortcoming of this locating system is its narrow functional application because the system communicates with locating tags in signals sent by the mobile terminal over a very short distance, usually up to 30 m, and based on the incoming response signal may or may not detect the objects of interest in this environment and enable or disable any wireless tags. In addition, this system does not perform any security functions, and does not allow to locate missing objects of interest immediately. The known system is not universal and convenient to configure and manage.

### Technical problem to be solved

The invention aims to extend the functionality and reliability of a wireless security and/or location system and to simplify its control.

### Disclosure of the invention

In order to solve the above problem according to the proposed invention, a security and/or location system with key modules for portable objects of interest comprising a mobile user terminal, which maintains two-way wireless communication with key tag modules, the key tag modules are configured as fixed key tag modules and mobile key tag modules, the mobile user terminal maintains two-way wireless communication with the fixed key tag modules and mobile key tag modules through a security device, which is attached to the portable object of interest in a concealed way, the relevant fixed key tag module is attached to each preselected removable part of the object of interest. Said mobile key tag modules are assigned to authorized users, and said user's mobile terminal is designed to be a key tag module only or a key tag module and a system configurator, which can activate or deactivate the fixed key tag modules and mobile key tag modules and change system operation algorithm. According to the present invention the security device may be provided with a location determination equipment.

### Advantages of the invention

Advantages of the proposed invention: the proposed system security device attached to the object of interest supports two-way wireless communication with the key tag modules and can be accessed using a mobile terminal over a long distance which is determined by the mobile communication network coverage. This system allows to find the security device associated with the object of interest and automatically detects unauthorized access to it, also makes it possible to be notified by the disappearance/appearance of the fixed key tag modules linked with it. The system provides a simple control of all key tag modules via the mobile terminal. The possibility for the user to quickly change the purpose of the key tag modules and functions via the mobile terminal allows to increase the security level of the object of interest by immediately eliminating the stolen or missing key tag modules from the list of authorized key tag modules, to include new key tag modules or to change their activation mode. The object of interest can be also used more conveniently by quickly adding new users to the list of authorized users and performing this function without being noticed by potential perpetrators.

To increase the performance of the security system, it is possible to use options of well-known mobile phones using them as mobile terminals, eliminating the need for additional expensive or difficult to obtain equipment. In the wireless security system the user's mobile terminal itself can be set as a mobile key tag module that can connect to the security system via its inbuilt wireless communication means, for instance, Bluetooth, NFC and etc. If necessary, it is possible to set such data exchange algorithm that the security system starts a communications session with the user's mobile phone only when at least one mobile key tag module is activated, thus reducing the likelihood of unauthorized system reconfiguration attempts and detection of the security device.

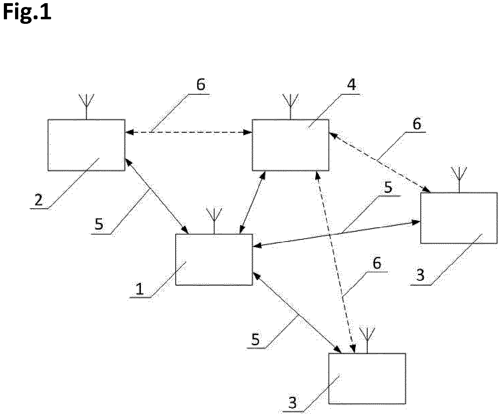

### Brief description of the drawing

Detailed description of the invention is explained in the drawing representing the wireless security and/or location system with key modules for portable objects.

### Description of at least one way of carrying out the invention

The system includes a concealed security device 1 attached to the object of interest, such as a boat hull, and key tag modules 2, 3 wirelessly associated with it. The security device 1 has detectors and indicators (not shown in the drawing): security detectors of security device 1 detect the presence of pre-set adverse conditions, and indicators wirelessly transmit the information of the security detectors to the user's mobile terminal 4. There are two types of key tag modules: fixed tag modules 2 and mobile tag modules 3. The fixed key tag modules 2 are attached in a concealed way to the preselected removable parts of the protected object such as boat motors. The mobile key tag modules 3 are carried by authorized users. Said key tag modules 2, 3 and the security device 1 are powered by autonomous power supply sources (if necessary, a single power supply source can be used). Communication of the security device 1 with the key tag modules 2, 3 takes place in the radio wave band requiring no additional licenses, such as Bluetooth interface operating in the range of 2.4 GHz, but not limited to it. The use of Bluetooth interface is convenient because it is available in most mobile terminals and uses the lowest amount of energy from all short-range communication interfaces.

The communication between the security device 1, all key tag modules of 2, 3 and the user's mobile terminal 4 is subject to high security requirements, therefore it must be two-way and have an option to change the encryption key frequently so that the third party could not pretend to be a key tag module 2, 3 belonging to the security device 1. The wireless communication encryption key is automatically changed by the security device. The options of all key tag modules 2, 3 (such as motion sensor sensitivity, key tag modules on/off) and the responses of the relevant detectors in the security device 1 to the key tag modules 2, 3 (e.g. the content of outgoing messages, the number and repetition frequency) are configured wirelessly by the user using the mobile terminal 4 (such as a mobile phone). The user's mobile terminal 4 can be used as one of the mobile key tag modules only or as one of the mobile key tag modules and as a system configurator. The system configurator can activate or deactivate the key tag modules 2, 3 and change the operation algorithm of the security device 1 (turn on/off responses to motion sensors, define the permissible object movement territory on the map and response when going beyond the boundaries - geofencing). Two types of key tag modules can be wirelessly connected to the security device: fixed 2 and mobile 3. The number of fixed 2 and mobile 3 key tag modules connected to the security device 1 is unlimited. If the fixed key tag module 2 stops sending identification messages wirelessly (it disappears from the wireless communication zone) or sends a message initiating the activation of an alarm with an alarm code (e.g. the power source is depleted to the critical level, in case of mechanical damage, attempt to detach the security device from the object of interest), the security device 1 switches the security system to the alarm mode and immediately transmits information to the user's mobile terminal 4 (relevant for the protection of constantly moving objects, such as boat motors, when a fixed key tag module 2 is attached to the hull of the boat or on a berth). When the mobile key tag module 3 stops wirelessly sending identification messages or disappears from the wireless communication zone, the security system is only switched to the alarm mode after recording the movement of the security device 1 with integrated sensors (e.g. accelerometer or if the security device has moved outside the pre-defined geofencing area) (suitable for the protection of mobile terrestrial objects - cars, motorcycles, trailers, etc.). To save energy, the communication of security device 1 to the mobile key tag module 3 is created only in case of movement of the security device 1 and the mobile key tag module 3. The mobile key tag module 3 may also send an activation message to the security device 1 with an alarm code (e.g. when the key tag module power is depleted to the critical level, or in case of mechanical damage). The mobile key tag module 3 can be wirelessly connected to several different security devices 1. Thus, the user can comfortably control several security devices with one key tag module. The communication 6 between the mobile terminal 4 and the key tag modules 2, 3 is carried out through the security device 1 via communication 5 rather than direct communication 6, thereby de-coupling the communication subsystems of the security system units and increasing security level so that it is not possible to connect (or monitor the communication) to the key tag modules through an unauthorized mobile terminal.

When the security device switches to the alarm mode, the user receives to his mobile terminal 4 via the mobile communication network the cause code and the current geographic location coordinates. The location coordinates are determined by the security device 1 from an integrated positioning equipment or by the mobile communication network from the location-based services (LBS). This data transmission is cyclically repeated over the specified time interval until the movement of the security device 1 is being detected. When the security device 1 stops moving, a message, containing the stopping event and the security device location coordinates, is sent to the user's mobile terminal 4 via the mobile communication network. Cyclical transmission of data is resumed when the security device 1 starts moving again. The alarm mode is switched off automatically when the communication with the mobile key tag 3 is recovered (by notifying the user about the communication restore event via the mobile communication network) or upon receipt of an encrypted message to disable the alarm mode from the user's mobile terminal 4 via the mobile communication network.

## Claims

1. A wireless security and/or location system with key modules for portable objects of interest comprising a mobile user terminal (4), which maintains two-way wireless communication with key tag modules (2, 3), **characterised in that**
the key tag modules are configured as fixed key tag modules (2) and mobile key tag modules (3),
the mobile user terminal (4) maintains two-way wireless communication with the fixed key tag modules (2) and mobile key tag modules (3) through a security device (1), which is attached to the portable object of interest in a concealed way,
the relevant fixed key tag module (2) is attached to each preselected removable part of the object of interest, said mobile key tag modules (3) are assigned to authorized users,
and said mobile user terminal (4) is designed to be a key tag module only or a key tag module and a system configurator, which can activate and deactivate the fixed key tag modules (2) and mobile key tag modules (3) and change system operation algorithm.

2. A system according to claim 1, **characterised in that** the security device (1) is provided with a location determination equipment.
